(19) Europäisches Patentamt
European Patent Office
Office européen des brevets

(11) **EP 3 076 625 B1**

(12) **EUROPÄISCHE PATENTSCHRIFT**

(45) Veröffentlichungstag und Bekanntmachung des Hinweises auf die Patenterteilung:
**27.09.2017 Patentblatt 2017/39**

(51) Int Cl.:
*H04L 27/18* (2006.01)   *H04L 27/20* (2006.01)
*H04L 27/22* (2006.01)

(21) Anmeldenummer: **15161941.8**

(22) Anmeldetag: **31.03.2015**

(54) **VERFAHREN UND SYSTEM ZUR ERHÖHUNG DER DATENRATE UND/ODER ROBUSTHEIT BEI DER ÜBERTRAGUNG VON TERNÄR VORKODIERTEN SIGNALEN**

METHOD AND SYSTEM FOR INCREASING THE DATA RATE AND/OR ROBUSTNESS IN THE TRANSMISSION OF TERNARY PRE-ENCODED SIGNALS

PROCÉDÉ ET SYSTÈME D'AUGMENTATION DU DÉBIT DES DONNÉES ET/OU DE LA ROBUSTESSE DURANT LA TRANSMISSION DE SIGNAUX TERNAIRES PRE-CODÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.10.2016 Patentblatt 2016/40**

(73) Patentinhaber: **AIRBUS DEFENCE AND SPACE GMBH**
**DE-85521 Ottobrunn (DE)**

(72) Erfinder:
• **Rieth, Dominik**
**85521 Ottobrunn (DE)**
• **Heller, Dr. Christoph**
**85521 Ottobrunn (DE)**

(74) Vertreter: **Isarpatent**
**Patent- und Rechtsanwälte Behnisch Barth Charles**
**Hassa Peckmann & Partner mbB**
**Friedrichstrasse 31**
**80801 München (DE)**

(56) Entgegenhaltungen:
• **SIMON M K: "MULTIPLE-BIT DIFFERENTIAL DETECTION OF OFFSET QPSK", IEEE TRANSACTIONS ON COMMUNICATIONS, Bd. 51, Nr. 6, 1. Juni 2003 (2003-06-01), Seiten 1004-1011, XP001169865, NJ, USA ISSN: 0090-6778, DOI: 10.1109/TCOMM.2003.813262**

• **ERIK PERRINS ET AL: "Shaped-Offset QPSK with Multiple-Bit Differential Detection", IEEE INTERNATIONAL CONFERENCE ON COMMUNICATIONS - ICC '06, 1. Juni 2006 (2006-06-01), Seiten 1212-1218, XP031025223, NJ, USA ISBN: 978-1-4244-0354-7**

• **BALACHANDRA KUMARASWAMY ET AL: "Simplified 2-State Detectors for SOQPSK", IEEE MILITARY COMMUNICATIONS CONFERENCE - MILCOM 2007, 29. Oktober 2007 (2007-10-29), Seiten 1-7, XP031232880, NJ, USA ISBN: 978-1-4244-1512-0**

• **PERRINS E ET AL: "Reduced-complexity approach to iterative detection of coded MIL-STD SOQPSK", IEEEGLOBAL TELECOMMUNICATIONS CONFERENCE - GLOBECOM '05, Bd. 3, 28. November 2005 (2005-11-28), Seiten 1609-1613, XP010880479, NJ, USA DOI: 10.1109/GLOCOM.2005.1577922 ISBN: 978-0-7803-9414-8**

• **UMASHANKAR BALASUBRAMANIAN ET AL: "Telemetry applications of SOQPSK and GMSK based modulation for airborne platforms", IEEE INTERNATIONAL CONFERENCE ON COMMUNICATIONS, DEVICES AND INTELLIGENT SYSTEMS - CODIS 2012, 28. Dezember 2012 (2012-12-28), Seiten 17-20, XP032321573, NJ, USA DOI: 10.1109/CODIS.2012.6422125 ISBN: 978-1-4673-4699-3**

**Beschreibung**

Das vorliegende Dokument befasst sich mit der drahtlosen Übertragung von Daten. Insbesondere befasst sich das vorliegende Dokument mit Modulationsverfahren, die eine hohe spektrale Effizienz und eine hohe Energieeffizienz ermöglichen.

Bei drahtlosen Übertragungsverfahren sind hohe Datenraten, spektrale Effizienz, Energieeffizienz und Fehlerrobustheit wünschenswerte Eigenschaften. Für drahtlose Übertragungsverfahren können unterschiedliche Modulationsarten eingesetzt werden, die hinsichtlich einer oder mehrerer der genannten Anforderungen optimiert sind. Da das für die Übertragung von Daten zur Verfügung stehende Frequenzspektrum limitiert ist, ist insbesondere die spektrale Effizienz eine wichtige Anforderung. Zusätzlich ist für den Betrieb einer Kommunikationsverbindung auf einer fliegenden Plattform (z.B. in einem Flugzeug) die Energieeffizienz eine wichtige Anforderung, da auf der fliegenden Plattform typischerweise nur begrenzte Energiemengen verfügbar sind. Modulationsverfahren, welche für eine geringe Bandbreitennutzung (d.h. für eine hohe spektrale Effizienz) und für eine hohe Energieeffizienz optimiert sind, sind typischerweise im Hinblick auf die zu übertragende Datenrate limitiert. Außerdem geht eine Optimierung der Bandbreitennutzung häufig zu Lasten der Fehlerrobustheit.

In Simon M K: "MULTIPLE-BIT DIFFERENTIAL DETECTION OF OFFSET QPSK", IEEE TRANSACTIONS ON COMMUNICATIONS, Bd. 51, Nr. 6, 1. Juni 2003 (2003-06-01), Seiten 1004-1011, XP001169865, NJ, USA, ist ein Verfahren zur Datenmodulation mit binären und ternären Daten beschrieben, welches auf Maximum-Likelihood-Überlegungen basiert. In Erik Perrins et al: "Shaped-Offset QPSK with Multiple-Bit Differential Detection", IEEE INTERNATIONAL CONFERENCE ON COMMUNICATIONS - ICC '06, 1. Juni 2006 (2006-06-01), Seiten 1212-1218, XP031025223, NJ, USA, sowie in Balachandra Kumaraswamy et al: "Simplified 2-State Detectors for SOQPSK", IEEE MILITARY COMMUNICATIONS CONFERENCE - MILCOM 2007, 29. Oktober 2007 (2007-10-29), Seiten 1-7, XP031232880, NJ, USA und in Perrins E et al: "Reduced-complexity approach to iterative detection of coded MIL-STD SOQPSK", IEEEGLOBAL TELECOMMUNICATIONS CONFERENCE - GLOBECOM '05, Bd. 3, 28. November 2005 (2005-11-28), Seiten 1609-1613, XP010880479, NJ, USA werden weitere Datenmodulationsverfahren beschrieben.

In Umashankar Balasubramanian et al: "Telemetry applications of SOQPSK and GMSK based modulation for airborne platforms", IEEE INTERNATIONAL CONFERENCE ON COMMUNICATIONS, DEVICES AND INTELLIGENT SYSTEMS - CODIS 2012, 28. Dezember 2012 (2012-12-28), Seiten 17-20, XP032321573, NJ, USA werden Telemetrie-Anwendungen von SOQPSK- und GMSK-basierten Modulationsverfahren für fliegende Plattformen beschrieben.

Das vorliegende Dokument befasst sich mit der technischen Aufgabe, ein Modulationsverfahren bereitzustellen, welches neben einer hohen spektralen Effizienz und einer hohen Energieeffizienz auch eine hohe Datenrate und/oder eine hohe Fehlerrobustheit ermöglicht.

Die technische Aufgabe wird durch die unabhängigen Ansprüche gelöst. Vorteilhafte Ausgestaltungen werden in den abhängigen Ansprüchen beschrieben.

Gemäß einem Aspekt wird ein Verfahren, gemäß Anspruch 1, zur Modulation von einem Signal mit ersten binären Daten beschrieben. Das Signal kann auch als Trägersignal bezeichnet werden. Beispielsweise kann das Signal ein Sinus/Cosinus-förmiges Signal mit einer bestimmten Frequenz und/oder Amplitude umfassen. Eine Phase des Signals kann mit den ersten binären Daten moduliert werden. Das modulierte Signal kann über einen drahtlosen Übertragungskanal von einem Sender an einen Empfänger übertragen werden.

Die ersten binären Daten umfassen eine Sequenz von ersten binären Ziffern $a(k)$, wobei jede erste binäre Ziffer $a(k)$ entweder einen ersten binären Ziffernwert oder einen zweiten binären Ziffernwert annehmen kann. Die binären Ziffernwerte können z.B. "0" und "1" sein. Insbesondere kann der erste binäre Ziffernwert "0" und der zweite binäre Ziffernwert "1" sein.

Das Verfahren umfasst das Generieren von ternären Daten, wobei die ternären Daten eine Sequenz von ternären Ziffern $\alpha(k)$ umfassen und wobei jede ternäre Ziffer $\alpha(k)$ einen ersten, zweiten oder dritten ternären Ziffernwert annehmen kann. Die ternären Ziffernwerte können "-1", "0" und "+1" sein. Insbesondere kann der erste ternäre Ziffernwert "0" sein. Der zweite ternäre Ziffernwert kann "-1" und der dritte Ziffernwert kann "+1" sein.

Das Verfahren umfasst weiter das Modulieren einer Phase des Signals mit den ternären Daten. Dabei kann die Phase des Signals M unterschiedliche Phasen-Zustände annehmen, mit M>2, wobei die ersten, zweiten und dritten ternären Ziffernwerte ersten, zweiten und dritten Zustandsübergängen zwischen den M Phasen-Zuständen entsprechen. Mit anderen Worten, die ersten, zweiten und dritten ternären Ziffernwerte können erste, zweite und dritte Zustandsübergänge repräsentieren. Bei dem ersten Zustandsübergang bleibt ein Phasen-Zustand erhalten. Andererseits bewirken der zweite Zustandsübergang und der dritte Zustandsübergang eine Veränderung des Phasen-Zustands. Beispielsweise kann der zweite Zustandsübergang eine Veränderung der Phase um $+\frac{\pi}{2}$, und der dritte Zustandsübergang eine Veränderung der Phase um $-\frac{\pi}{2}$ 2 bewirken.

Die ternären Daten werden derart generiert, dass allen ersten binären Ziffern $a(k)$ mit dem ersten binären Ziffernwert ternäre Ziffern $\alpha(k)$ mit dem ersten ternären Ziffernwert zugewiesen werden. Mit anderen Worten alle ersten binären Ziffern $a(k)$ mit dem ersten binären Ziffernwert können in ternäre Ziffern $\alpha(k)$ mit dem ersten ternären Ziffernwert überführt werden.

Desweiteren werden die ternären Daten derart generiert, dass allen ersten binären Ziffern $a(k)$ mit dem zweiten binären Ziffernwert ternäre Ziffern $\alpha(k)$ mit dem zweiten oder dritten ternären Ziffernwert zugewiesen werden, so dass in der Sequenz von ternären Ziffern $\alpha(k)$ der zweite ternäre Ziffernwert nicht direkt auf den dritten Ziffernwert folgt und umgekehrt.

Durch das Verfahren wird es ermöglicht, über die ersten binären Daten hinausgehende Daten in dem modulierten Signal zu übertragen, ohne dabei die spektrale Effizienz und die Energieeffizienz des modulierten Signals zu reduzieren. Es wird somit ein Modulationsverfahren bereitgestellt, welches neben einer hohen spektralen Effizienz und einer hohen Energieeffizienz auch eine hohe Datenrate und/oder eine hohe Fehlerrobustheit ermöglicht.

Die ternären Daten können derart generiert werden, dass ein zusammenhängender Block von ersten binären Ziffern $a(k)$ mit dem zweiten binären Ziffernwert ternäre Ziffern $\alpha(k)$ mit dem gleichen ternären Ziffernwert zugewiesen werden. Insbesondere kann ein zusammenhängender Block von ersten binären Ziffern $a(k)$ mit dem zweiten binären Ziffernwert einem entsprechenden zusammenhängenden Block von ternären Ziffern $\alpha(k)$ mit dem gleichen ternären Ziffernwert (entweder dem zweiten oder dem dritten ternären Ziffernwert) zugewiesen werden. Diese Zuweisung kann für alle zusammenhängenden Blöcke von ersten binären Ziffern $\alpha(k)$ mit dem zweiten binären Ziffernwert erfolgen. So kann erreicht werden, dass in der Sequenz von ternären Ziffern $\alpha(k)$ der zweite ternäre Ziffernwert nicht direkt auf den dritten Ziffernwert folgt und umgekehrt.

Die ternären Daten werden derart generiert, dass einer ternären Ziffer $\alpha(k)$ der zweite oder dritte ternäre Ziffernwert in Abhängigkeit von zweiten binären Daten zugewiesen wird. So können anhand des ternären Ziffernwerts einer ternären Ziffer $\alpha(k)$ über die ersten binären Daten hinausgehende zweite binäre Daten übertragen werden, ohne dabei die spektrale Effizienz und Energieeffizienz zu reduzieren.

Insbesondere umfassen die zweiten binären Daten eine zweite binäre Ziffer $x(n)$, und eine ternäre Ziffer $\alpha(k)$ nimmt in Abhängigkeit von der zweiten binären Ziffer $x(n)$ den zweiten ternären Ziffernwert oder den dritten ternären Ziffernwert an. Mit anderen Worten, ein zusammenhängender Block von ternären Ziffern $\alpha(k)$ für einen zusammenhängenden Block von ersten binären Ziffern $a(k)$ mit dem zweiten binären Ziffernwert kann dazu verwendet werden, (genau) eine zweite binäre Ziffer $x(n)$ aus den zweiten binären Daten zu übertragen.

Das Verfahren kann weiter das Bereitstellen einer Eins-zu-Eins Zuordnung zwischen den ersten und zweiten binären Ziffernwerten und den zweiten und dritten ternären Ziffernwerten umfassen. Die Eins-zu-Eins Zuordnung kann z.B. $\alpha = 2x - 1$ sein, wobei x der Ziffernwert einer zweiten binären Ziffer $x(n)$ aus den zweiten binären Daten ist. Die Variable $\alpha$ ist der Ziffernwert einer ternären Ziffer $\alpha(k)$ aus den ternären Daten, wobei in diese ternäre Ziffer $\alpha(k)$ der Ziffernwert x der zweiten binären Ziffer $x(n)$ kodiert werden soll.

Die ternären Daten können derart generiert werden, dass entweder der zweite oder dritte ternäre Ziffernwert in Abhängigkeit von der Eins-zu-Eins Zuordnung zugewiesen wird. Insbesondere kann die Eins-zu-Eins Zuordnung dazu verwendet werden, in Abhängigkeit von dem Ziffernwert x einer zweiten binären Ziffer $x(n)$ zu ermitteln, ob ein zusammenhängender Block von ternären Ziffern $\alpha(k)$ den zweiten ternären Ziffernwert oder den ersten ternären Ziffernwert annimmt. Die Verwendung einer Eins-zu-Eins Zuordnung ermöglicht ein eindeutige Kodierung von zweiten binären Daten in die ternären Daten.

Die zweiten binären Daten können zweite binäre Ziffern $x(n)$ zur Fehlerkorrektur von zumindest einem der ersten binären Ziffern $a(k)$ der ersten binären Daten umfassen. So kann in effizienter Weise die Fehlerrobustheit des Modulationsverfahrens erhöht werden. Alternativ oder ergänzend können die zweiten binären Daten über die ersten binären Daten hinausgehende Information umfassen. So kann die Datenrate des Modulationsverfahrens erhöht werden.

Beispielsweise können die zweiten binären Daten und die ersten binären Daten Teil einer Gesamtsequenz von binären Ziffern sein. Das Verfahren kann umfassen, das Zuweisen einer binären Ziffer aus der Gesamtsequenz, welche direkt auf eine binäre Ziffer mit dem zweiten binären Ziffernwert folgt, zu den zweiten binären Daten. Desweiteren können binären Ziffern aus der Gesamtsequenz, welche den ersten binären Ziffernwert aufweisen, zumindest teilweise den ersten binären Daten zugewiesen werden. Insbesondere können die binären Ziffern den ersten binären Daten zugewiesen werden, solange die binären Ziffern den ersten Ziffernwert annehmen. Wenn eine binäre Ziffer den zweiten Ziffernwert annimmt, so kann diese binäre Ziffer noch den ersten binären Daten zugewiesen werden. Die direkt darauf folgende binäre Ziffer wird dann den zweiten binären Daten zugewiesen und die direkt darauf folgende binäre Ziffer wird dann wieder den ersten binären Daten zugewiesen. So kann nach und nach eine Aufteilung der Gesamtsequenz in erste binäre Daten und zweite binäre Daten erfolgen. Insgesamt kann so die Übertragung der Gesamtsequenz von binären Ziffern beschleunigt werden.

Die Phase des Signals kann derart moduliert werden, dass zwischen zwei aufeinander folgenden ternären Ziffern $\alpha(k - 1), \alpha(k)$ die Phase stetig gemäß dem ersten, zweiten oder dritten Zustandsübergang von einem aktuellen Phasen-Zustand in einen neuen Phasen-Zustand überführt wird. Mit anderen Worten, die Übergänge zwischen den Phasen-Zuständen können fließend und nicht abrupt erfolgen. Die Phase des Signals kann somit gemäß der ternären Daten mit einem Continuous Phase Modulation Verfahren moduliert werden. So kann eine hohe spektrale Effizienz erreicht werden.

Die Phase des Signals kann z.B. M=4 unterschiedlichen Phasen-Zustände annehmen. Die unterschiedlichen Phasen-Zustände können (zumindest teilweise) einen Phasenabstand von $\frac{\pi}{2}$ zueinander aufweisen. Die M unterschiedlichen Phasen-Zustände können insbesondere einen ersten Phasen-Zustand mit einer Phase $(0 + \varphi)$, einen zweiten Phasen-Zustand mit einer Phase $\left(\frac{\pi}{2} + \varphi\right)$, einen dritten Phasen-Zustand mit einer Phase $(\pi + \varphi)$ und einen vierten Phasen-Zustand mit einer Phase $\left(-\frac{\pi}{2} + \varphi\right)$ umfassen, mit $\varphi \in \left[0, \frac{\pi}{2}\right)$, z.B. $\varphi = 0$. Beispiele hierfür sind z.B. ein QPSK oder ein Offset-QPSK Modulationsverfahren.

Die Sequenz von ternären Ziffern $\alpha(k)$ umfasst typischerweise eine Anzahl von ternären Ziffern $\alpha(k)$, die der Anzahl von ersten binären Ziffern $a(k)$ der Sequenz von ersten binären Ziffern $a(k)$ entspricht. Desweiteren wird typischerweise jeder ersten binären Ziffer $a(k)$ genau eine ternäre Ziffer $\alpha(k)$ zugewiesen (und umgekehrt).

Gemäß einem weiteren Aspekt wird ein Modulator für einen Sender eines (ggf. drahtlosen) Übertragungssystems beschrieben. Der genaue Aufbau dieses Modulators ist in Anspruch 11 angegeben. Gemäß einem weiteren Aspekt wird ein Verfahren zur Demodulation eines Signals beschrieben, welches mit ternären Daten moduliert wurde. Das Verfahren umfasst die in Anspruch 12 definierten Schritte. Gemäß einem weiteren Aspekt wird ein Demodulator für einen Empfänger eines Übertragungssystems beschrieben. Der Demodulator ist in Anspruch 13 wiedergegeben. Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Desweiteren können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden. Die vorliegende Erfindung ist durch die angehängten Ansprüche definiert und nur durch deren Umfang beschränkt. Im Weiteren wird die Erfindung anhand von Ausführungsbeispielen näher beschrieben. Dabei zeigen

Figur 1 ein Blockdiagramm eines beispielhaften Übertragungssystems;
Figur 2a ein Blockdiagramm eines beispielhaften Modulators;
Figur 2b Zustände und Zustandsübergänge eines beispielhaften Modulationsverfahrens;
Fig. 3 ein Blockdiagramm eines weiteren beispielhaften Modulators; und
Fig. 4 ein Ablaufdiagramm eines beispielhaften Verfahrens zur Modulation eines Signals.

Wie einleitend dargelegt, befasst sich das vorliegende Dokument mit der Bereitstellung eines Modulationsverfahrens, welches die Erhöhung einer Datenrate und/oder der Fehlerrobustheit ermöglicht. Das Modulationsverfahren soll dabei eine unverändert hohe spektrale Effizienz und Energieeffizienz aufweisen.

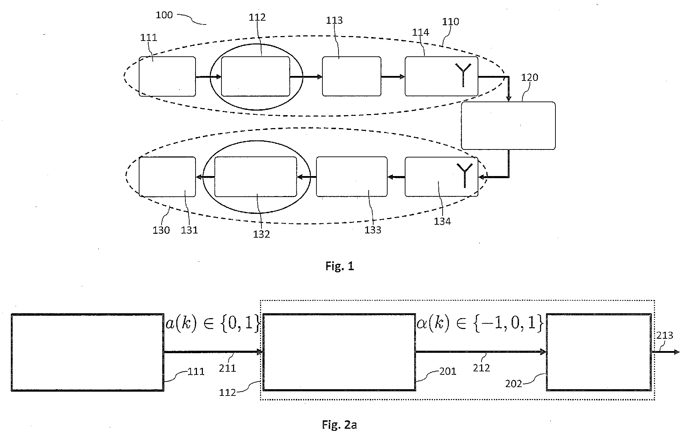

In diesem Zusammenhang zeigt Fig. 1 ein Blockdiagramm eines beispielhaften Daten-Übertragungssystems 100. Das Übertragungssystem 100 ist eingerichtet, Daten von einem Sender 110 über einen drahtlosen Übertragungskanal 120 an einen Empfänger 130 zu übertragen. Der Sender 110 umfasst eine Datenquelle (auch als Bitquelle bezeichnet) 111, die eingerichtet ist, eine Sequenz von binären Daten $a(k)$ bereitzustellen. Desweiteren umfasst der Sender 110 eine Modulator 112, der eingerichtet ist, die Sequenz von binären Daten $\alpha(k)$ auf ein Trägersignal zu modulieren. Außerdem umfasst der Sender 110 ein Sende-Frontend 113, das eingerichtet ist, das modulierte Trägersignal für die Übertragung vorzubereiten (z.B. das modulierte Trägersignal aus einem Basis-Frequenzband in ein Übertragungs-Frequenzband zu transferieren) und ein Übertragungssignal bereitzustellen. Das Übertragungssignal wird dann über eine Antenne 114 auf den drahtlosen Übertragungskanal 120 gelegt.

Der Empfänger 130 umfasst in entsprechender Weise zu dem Sender 110 eine Antenne 134 zum Empfang des Übertragungssignals und ein Empfangs-Frontend 133 zur Bereitstellung eines modulierten Empfangssignals (z.B. durch Transferierung in das Basis-Frequenzband). Anhand von einem Demodulator 132 kann die Sequenz von binären Daten aus dem modulierten Empfangssignal ermittelt und zu einer Datensenke (auch als Bitsenke bezeichnet) 131 geleitet werden.

Der Modulator 112 kann eingerichtet sein, ein sogenanntes Continuous Phase Modulation (CPM) Verfahren auszuführen. CPM Verfahren ermöglichen wegen ihrer konstanten Einhüllenden den Einsatz von nichtlinearen Verstärkern und erreichen somit eine hohe Energieeffizienz. Eine Unterfamilie der CPM Verfahren sind die sogenannten Shaped Offset Quadrature Phase Shift Keying (SOQPSK) Verfahren, welche gleichzeitig eine Reduktion der zur Übertragung notwendigen Bandbreite (d.h. eine hohe Bandbreiteneffizienz) ermöglichen. Die Übertragungsrate für diese Modulationsart beträgt jedoch nur 1 Bit/Symbol und limitiert somit die maximal übertragbare Datenrate. Zusätzlich ergibt sich als Folge der Bandbreitenreduktion eine geringere Fehlerrobustheit als vor der Bandbreitenreduktion.

Der Modulator 112 zur Ausführung des SOQPSK Verfahrens weist einen Precoder 201 auf, der eingerichtet ist, aus den binären Daten 211 ternäre Daten 212 zu generieren, so dass jede binäre Ziffer $a(k) \in \{0,1\}$ der binären Daten 211 durch eine ternäre Ziffer $\alpha(k) \in \{-1,0,1\}$ der ternären Daten 212 wiedergegeben wird (siehe Fig. 2a). Eine Möglichkeit zur Ermittlung eines ternären Ziffernwertes aus einem binären Ziffernwert ist durch folgende Formel gegeben:

$$\alpha(k) = (-1)^{k+1}(2a(k-1) - 1)\big(a(k) - a(k-2)\big).$$

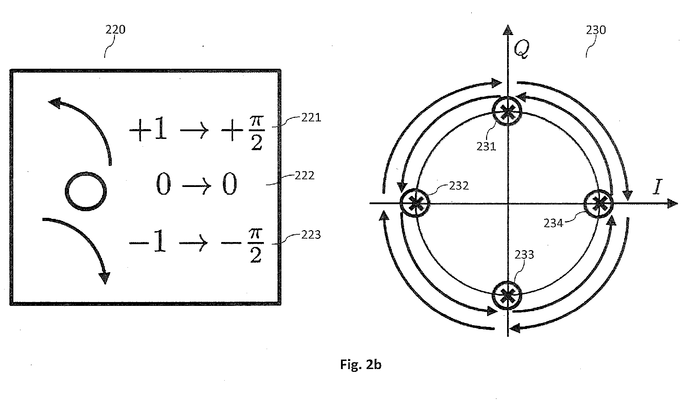

Nach Ermittlung von ternären Daten 212 werden diese in einer Modulationseinheit 202 auf ein Trägersignal moduliert. Die Modulationseinheit 202 kann insbesondere eingerichtet sein, ein CPM Verfahren auszuführen. Fig. 2b veranschaulicht ein auf Offset-QPSK basiertes Modulationsverfahren. Auf der rechten Seite werden unterschiedliche Phasen-Zustände 230 ohne Beschränkung der Allgemeinheit, insbesondere die Phasen-Zustände 0 (Referenzzeichen 234), $\frac{\pi}{2}$ (Referenzzeichen 231), $\pi$ (Referenzzeichen 232) und $-\frac{\pi}{2}$ (Referenzzeichen 232), dargestellt. Alternativ sind auch verschobene Werte denkbar. Desweiteren zeigt Fig. 2b Zustandsübergänge 220 und die ternären Ziffernwerte, die zu den einzelnen Zustandsübergängen 220 führen. So kann ein ternärer Ziffernwert von +1 zu einer Phasenverschiebung von $+\frac{\pi}{2}$ (Referenzzeichen 221) führen. Ein ternärer Ziffernwert von 0 kann zu einer Phasenverschiebung von 0 (Referenzzeichen 222) führen und ein ternärer Ziffernwert von -1 zu einer Phasenverschiebung von $-\frac{\pi}{2}$ (Referenzzeichen 223) führen. Der ternärer Ziffernwert von 0 wird in diesem Dokument auch als der erste ternäre Ziffernwert bezeichnet. Der Zustandsübergang mit einer Phasenverschiebung von 0 wird in diesem Dokument auch als der erste Zustandsübergang 222 bezeichnet.

Bei den CPM Verfahren erfolgt zwischen zwei ternären Ziffern $\alpha(k)$ eine stetige Änderung der Phase eines Trägersignals. Das heißt, dass sich in einem Zeitintervall zwischen zwei aufeinander folgenden ternären Ziffern $\alpha(k)$ die Phase gemäß der vordefinierten Zustandsübergänge 220 stetig von einem Ausgangszustand 230 zu einem Endzustand 230 verändert (z.B. bei einem Ausgangszustand 234 und einem Zustandsübergang 221 zu dem Endzustand 231). Dieser stetige Übergang zwischen den Zuständen 230 führt zu einer hohen Energieeffizienz von CPM Verfahren.

Der Precoder 201 ist eingerichtet, die ternären Daten 212 derart zu ermitteln, dass in den ternären Daten 212 keine Symbolübergänge von -1 nach +1 und/oder von +1 nach -1 auftreten. So können direkt aufeinander Zustandsübergange 221 und 223 vermieden werden, was vorteilhaft für die spektrale Effizienz des Modulationsverfahrens ist.

Andererseits führt die Generierung von ternären Daten 212 dazu, dass mit jedem Offset-QPSK Symbol nur ein binärer Ziffernwert, d.h. 1 Bit, übertragen werden kann. Im Folgenden wird ein Verfahren beschrieben, welches es ermöglicht, zusätzliche Daten (zur Erhöhung der Datenrate und/oder zur Erhöhung der Fehlerrobustheit) auf das Trägersignal zu modulieren. Insbesondere kann dazu das Precoding von Offset-QPSK (OQPSK) oder einer gefilterten/shaped Variante (z.B. SOQPSK) abgewandelt werden, um bei gleichbleibender spektraler Bandbreite und gleicher Energieeffizienz, entweder die Datenrate oder die Robustheit der Übertragung zu erhöhen, oder beides zu kombinieren. Dazu können zusätzliche Daten, unter Beachtung der Energieeffizienz und Bandbreiteneffizienz, in die ternären Daten 212 zur Übertragung eingearbeitet werden. Diese zusätzlichen Daten können dazu verwendet werden, die Datenrate und/oder die Robustheit zu erhöhen.

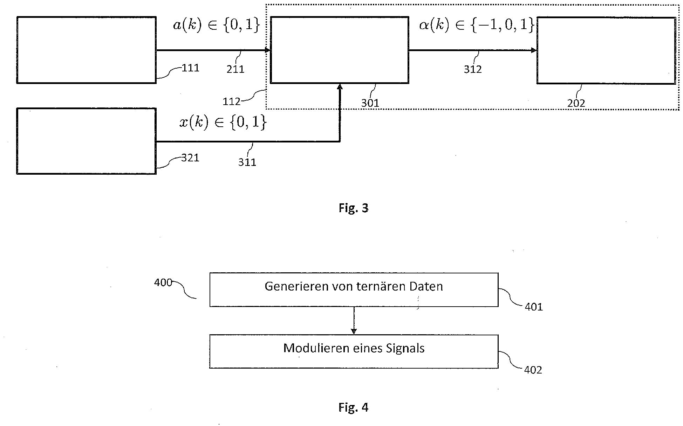

Fig. 3 zeigt einen Modulator 112, der eingerichtet ist, zusätzlich zu ersten binären Daten 211 aus einer ersten Datenquelle 111 zweite binäre Daten 311 aus einer zweiten Datenquelle 321 in die ternären Daten 312 aufzunehmen. Die zweiten binären Daten 311 können dazu verwendet werden, um die Fehlerrobustheit der ersten binären Daten 211 zu erhöhen (z.B. durch Einfügen von Fehlerkorrektur-Bits) und/oder um die Datenrate des Übertragungssystems 100 zu erhöhen.

Die zweiten binären Daten 311 werden dabei derart in die ternären Daten 312 eingefügt, dass weiterhin die Effizienzbedingung gilt, dass die ternären Daten 312 keine direkten Übergänge von -1 auf +1 bzw. von +1 auf -1 aufweisen, bzw. dass ein Zustandsübergang 221 nicht direkt von dem konträren Zustandsübergang 223 gefolgt wird (oder umgekehrt). Durch diese Effizienzbedingung wird gewährleistet, dass die spektrale Effizienz und/oder die Energieeffizienz des Modulationsverfahrens erhalten bleiben.

Desweiteren sollen bei der Zuweisung der ersten binären Daten 111 zu den ternären Daten 312 Freiräume geschaffen werden, um auch die zweiten binären Daten 311 innerhalb der ternären Daten 312 übertragen zu können. Diese Freiräume können durch folgende Zuweisungsregel erreicht werden:

Eine erste binäre Ziffer $a(k)$ der ersten binären Daten 111 mit einem ersten binären Ziffernwert (entweder 0 oder 1) wird einer ternären Ziffer $\alpha(k)$ der ternären Daten 312 mit dem ersten ternären Ziffernwert zugewiesen. Mit anderen Worten, erste binäre Ziffern $a(k)$ der ersten binären Daten 111 mit dem ersten binären Ziffernwert (entweder 0 oder 1) werden dem ersten Zustandsübergang 222 zugewiesen, bei dem keine Veränderung der Phase erfolgt.

Als Folge aus der ersten Zuweisungsregel ist für einen Empfänger 130 bekannt, dass wenn die ternären Daten 312 einen anderen Zustandsübergang 220 als den ersten Zustandsübergang 222 anzeigen, der Wert der ersten binären Daten 111 dem zweiten binären Ziffernwert (d.h. entweder 1 oder 0) entsprechen muss, wobei der zweite binäre Ziffernwert der komplementäre binäre Ziffernwert zu dem ersten binären Ziffernwert ist. Wenn also in dem o.g. Beispiel eine ternäre Ziffer $\alpha(k)$ den Wert -1 bzw. +1 annimmt, so ist bekannt, dass die entsprechende erste binäre Ziffer $a(k)$ den zweiten binären Ziffernwert aufweist.

Die Tatsache, ob eine ternären Ziffer $\alpha(k)$ den Wert -1 bzw. +1 annimmt, kann dazu verwendet werden, zusätzliche zweite Daten 311 zu übertragen. Um weiterhin die o.g. Effizienzbedingung zu erfüllen, d.h. um weiterhin direkt Übergänge zwischen -1 und +1 zu vermeiden, kann dazu in einem zusammenhängenden Block von zweiten binären Ziffern $a(k)$ mit dem zweiten Ziffernwert jeweils nur eine zweite binäre Ziffer $x(n)$ (d.h. nur ein Bit) der zweiten binären Daten 311 kodiert werden.

Insbesondere kann ein zusammenhängender Block von ersten binären Ziffern $a(k)$ mit dem zweiten binären Ziffernwert in einen zusammenhängenden Block von ternären Ziffern $\alpha(k)$ mit dem ternären Ziffernwert +1 bzw. -1 überführt werden, wobei die Tatsache, ob der zusammenhängende Block der ternären Ziffern $\alpha(k)$ den ternären Ziffernwert +1 bzw. den ternären Ziffernwert -1 annimmt von der zu übertragenden zweiten binären Ziffer $x(n)$ der zweiten binären Daten 311 abhängt. Insbesondere können durch eine Eins-zu-Eins Zuweisung die binären Ziffernwerte {0,1} den ternären Ziffernwerten {-1, +1} zugewiesen werden, z.B. durch die Formel $\alpha = 2x - 1$, wobei $x \in \{0,1\}$ der binäre Ziffernwert einer zweiten binären Ziffer $x(n)$ der zweiten binären Daten 311 ist, und wobei $\alpha \in \{-1, +1\}$ der ternäre Ziffernwert der ternären Ziffer $\alpha(k)$ entspricht, in die zweiten binäre Ziffer $x(n)$ kodiert werden soll.

Tabelle 1 zeigt beispielhafte zweite binäre Daten 311 und Tabelle 2 zeigt beispielhafte erste binäre Daten 111. Die zweiten binären Daten 311 umfassen eine Sequenz von zweiten binären Ziffern $x(n)$, mit $n = 1, ... , N$, wobei $N = 6$ in Tabelle 1. Die ersten binären Daten 111 umfassen eine Sequenz von ersten binären Ziffern $a(k)$, mit $k = 1, ..., K$, wobei $K = 17$ in Tabelle 2.

Es ist aus Tabelle 2 ersichtlich, dass aufgrund der Zuweisungsregel alle ersten binären Ziffern $a(k)$ mit dem binären Ziffernwert "0" entsprechenden ternären Ziffern $a(k)$ der ternären Daten 312 mit dem ternären Ziffernwert "0" zugewiesen werden. Aufgrund der Eins-zu-Eins Zuweisung werden den zusammenhängenden Blöcken von ersten binären Ziffern $a(k)$ mit dem binären Ziffernwert "1" entsprechende zusammenhängende Blöcke von ternären Ziffern $\alpha(k)$ zugewiesen, wobei der ternäre Ziffernwert eines zusammenhängenden Blocks von ternären Ziffern $\alpha(k)$ von der zweiten binären Ziffer $x(n)$ abhängt, die übertragen werden soll.

In dem dargestellten Beispiel wird in dem Block $k = 2$ die zweite binäre Ziffer $x(n)$ für $n = 1$, in dem Block $k = 4,... ,6$ die zweite binäre Ziffer $x(n)$ für $n = 2$, in dem Block $k = 9$ die zweite binäre Ziffer $x(n)$ für $n = 3$, in dem Block $k = 12,13$ die zweite binäre Ziffer $x(n)$ für $n = 4$ und in dem Block $k = 15,16$ die zweite binäre Ziffer $x(n)$ für $n = 5$ übertragen. Da für die Kodierung einer zweiten binären Ziffer $x(n)$ nur die ternären Ziffernwerte "-1" und "+1" zu Verfügung stehen, werden die binären Ziffernwerte "0" und "1" der zweiten binären Ziffern $x(n)$ auf die ternären Ziffernwerte "-1" und "+1" mit einer Eins-zu-Eins Zuweisung (z.B. $\alpha = 2x - 1$) gemappt.

**Tabelle 1**

| $n$ | 1 | 2 | 3 | 4 | 5 | 6 |
|---|---|---|---|---|---|---|
| $x(n)$ | 1 | 1 | 0 | 1 | 0 | 0 |
| $2x - 1$ | 1 | 1 | -1 | 1 | -1 | -1 |

**Tabelle 2**

| $k$ | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| $a(k)$ | 0 | 1 | 0 | 1 | 1 | 1 | 0 | 0 | 1 | 0 | 0 | 1 | 1 | 0 | 1 | 1 | 0 |
| $n$ | | 1 | | 2 | 2 | 2 | | | 3 | | | 4 | 4 | | 5 | 5 | |
| $\alpha(k)$ | 0 | 1 | 0 | 1 | 1 | 1 | 0 | 0 | -1 | 0 | 0 | 1 | 1 | 0 | -1 | -1 | 0 |

In Tabelle 3 ist ein Pseudocode wiedergegeben, durch den die o.g. Funktionsweise des Precoders 301 implementiert werden kann.

**Tabelle 3**

```
x_ = 2*x-1;
INIT n = 1;
FORALL k
 IF a(k-1)==0 && a(k)==1 // steigende Flanke
  α(k) = x_(n);
 ELSEIF a(k-1)==1 && a(k)==1 //
  α(k) = x_(n);
 ELSEIF a(k-1)==1 && a(k)==0 // fallende Flanke
  α(k) = 0;
  n = n + 1;
 ELSEIF a(k-1)==0 && a(k)==0 //
  α(k) = 0;
END
```

In Zusammenhang mit Fig. 3 wurde das Einfügen von zusätzlichen zweiten binären Daten 311 beschrieben. Es wird darauf hingewiesen, dass alternativ oder ergänzend die ersten binären Daten 111 schneller übertragen werden können, d.h. in jeden zusammenhängenden Block, in dem die ersten binären Daten 111 den zweiten binären Ziffernwert annehmen, kann direkt die folgende Ziffer der ersten binären Daten 111 übertragen werden.

Es kann gezeigt werden, dass durch das in diesem Dokument beschriebene Verfahren, die Datenrate um 25% erhöht werden kann (bei unveränderter spektraler Effizienz und Energieeffizienz).

Das Modulationsverfahren wurde in diesem Dokument am Beispiel des Modulators 112 beschrieben. Es wird darauf hingewiesen, dass der Demodulator 132 eines Empfängers 130 in entsprechender Weise angepasst werden kann, und Merkmals aufweist, die den Merkmalen des Modulators 112 entsprechen.

Fig. 4 zeigt ein Ablaufdiagramm eines beispielhaften Verfahrens 400 zur Modulation von einem Signal mit ersten binären Daten 111. Wie in diesem Dokument dargelegt umfassen die ersten binären Daten 111 eine Sequenz von ersten binären Ziffern $a(k)$, wobei jede erste binäre Ziffer $a(k)$ entweder einen ersten binären Ziffernwert (z.B. "0") oder einen zweiten binären Ziffernwert (z.B. "1") annehmen kann.

Das Verfahren 400 umfasst das Generieren 401 von ternären Daten 312, wobei die ternären Daten 312 eine Sequenz von ternären Ziffern $\alpha(k)$ umfassen und wobei jede ternäre Ziffer $\alpha(k)$ einen ersten, zweiten oder dritten ternären Ziffernwert (z.B. respektive "0", "-1" und "+1") annehmen kann.

Desweiteren umfasst das Verfahren 400 das Modulieren 402 einer Phase des Signals mit den ternären Daten 312. Dabei kann die Phase des Signals M unterschiedliche Phasen-Zustände 230 annehmen, mit M>2 (z.B. M=4). Die ersten, zweiten und dritten ternären Ziffernwerte können (respektive) ersten, zweiten und dritten Zustandsübergängen 220 zwischen den M Phasen-Zuständen 230 entsprechen. Dabei bleibt bei dem ersten Zustandsübergang 222 ein Phasen-Zustand 230 erhalten. Andererseits bewirken der zweite Zustandsübergang 221 und der dritte Zustandsübergang 223 eine Veränderung des Phasen-Zustands 230.

Die ternären Daten 312 werden derart generiert, dass allen ersten binären Ziffern $a(k)$ mit dem ersten binären Ziffernwert ternäre Ziffern $\alpha(k)$ mit dem ersten ternären Ziffernwert zugewiesen werden. Diese Zuweisungsregel ermöglicht es, Freiräume für die Übertragung von weiteren Daten (z.B. von zweiten binären Daten 311) zu schaffen.

Außerdem werden die ternären Daten 312 derart generiert, dass allen ersten binären Ziffern $a(k)$ mit dem zweiten binären Ziffernwert ternäre Ziffern $\alpha(k)$ mit dem zweiten oder dritten ternären Ziffernwert zugewiesen werden, so dass in der Sequenz von ternären Ziffern $\alpha(k)$ der zweite ternäre Ziffernwert nicht direkt auf den dritten Ziffernwert folgt und umgekehrt. Durch diese Zuweisungsregel wird bewirkt, dass das modulierte Signal eine hohe spektrale Effizienz und Energieeffizienz aufweist.

Das beschriebene Verfahren ermöglicht somit die Übertragung von Zusatzinformation zur Datenratenerhöhung und/oder zur Erhöhung der Fehlerrobustheit bei gleichbleibender spektraler Bandbreite und Energieeffizienz. Dies alles kann in kleiner, günstiger, energieeffizienter und leichter Hardware realisiert werden, und bietet daher optimale Voraussetzungen z.B. für den Einsatz auf fliegenden Plattformen. Ein weiterer Vorteil besteht in der Möglichkeit flexible Übertragungen zu realisieren, die ihre Datenrate und Fehlerkorrektur-Eigenschaften in Echtzeit anpassen (z.B. an die Kanaleigenschaften des Übertragungskanals 120).

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen. Die vorliegende Erfindung ist durch die angehängten Ansprüche definiert und nur durch deren Umfang beschränkt.

**Patentansprüche**

1. Verfahren (400) zur Modulation von einem Signal mit ersten binären Daten (111); wobei die ersten binären Daten (111) eine Sequenz von ersten binären Ziffern a(k) umfassen; wobei jede erste binäre Ziffer a(k) entweder einen ersten binären Ziffernwert oder einen zweiten binären Ziffernwert annehmen kann; wobei das Verfahren (400) umfasst,

   - Generieren (401) von ternären Daten (312); wobei die ternären Daten (312) eine Sequenz von ternären Ziffern $\alpha(k)$ umfassen; und wobei jede ternäre Ziffer $\alpha(k)$ einen ersten, zweiten oder dritten ternären Ziffernwert annehmen kann; und
   - Modulieren (402) einer Phase des Signals mit den ternären Daten (312); wobei die Phase des Signals M unterschiedliche Phasen-Zustände (230) annehmen kann, mit M>2; wobei die ersten, zweiten und dritten ternären Ziffernwerte ersten, zweiten und dritten Zustandsübergängen (220) zwischen den M Phasen-Zuständen (230) entsprechen; wobei bei dem ersten Zustandsübergang (222) ein Phasen-Zustand (230) erhalten bleibt; wobei der zweite Zustandsübergang (221) und der dritte Zustandsübergang (223) eine Veränderung des Phasen-Zustands (230) bewirken; und wobei die ternären Daten (312) derart generiert werden, dass

      - allen ersten binären Ziffern a(k) mit dem ersten binären Ziffernwert ternäre Ziffern $\alpha(k)$ mit dem ersten ternären Ziffernwert zugewiesen werden;
      - allen ersten binären Ziffern a(k) mit dem zweiten binären Ziffernwert ternäre Ziffern $\alpha(k)$ mit dem zweiten oder dritten ternären Ziffernwert zugewiesen werden, so dass in der Sequenz von ternären Ziffern $\alpha(k)$ der zweite ternäre Ziffernwert nicht direkt auf den dritten Ziffernwert folgt und umgekehrt; **dadurch gekennzeichnet, dass** bei der Generierung der ternären Daten weiterhin der zweite oder dritte ternäre Ziffernwert in Abhängigkeit von zweiten binären Daten (311) zugewiesen wird;

   wobei

      - die zweiten binären Daten (311) eine zweite binäre Ziffer x(n) umfassen; und
      - eine ternäre Ziffer $\alpha(k)$ in Abhängigkeit von der zweiten binären Ziffer x(n) den zweiten ternären Ziffernwert oder den dritten ternären Ziffernwert annimmt.

2. Verfahren (400) gemäß Anspruch 1, wobei die ternären Daten (312) derart generiert werden, dass ein zusammenhängender Block von ersten binären Ziffern a(k) mit dem zweiten binären Ziffernwert ternären Ziffern $\alpha(k)$ mit dem gleichen ternären Ziffernwert zugewiesen werden.

3. Verfahren (400) gemäß Anspruch 1, wobei

   - das Verfahren (400) weiter umfasst: Bereitstellen einer Eins-zu-Eins Zuordnung zwischen den ersten und zweiten binären Ziffernwerten und den zweiten und dritten ternären Ziffernwerten; und
   - die ternären Daten (312) derart generiert werden, dass der zweite oder dritte ternäre Ziffernwert in Abhängigkeit von der Eins-zu-Eins Zuordnung zugewiesen wird.

4. Verfahren (400) gemäß Anspruch 3, wobei

   - die Eins-zu-Eins Zuordnung $\alpha = 2x - 1$ ist;
   - x der Ziffernwert einer zweiten binären Ziffer x(n) aus den zweiten binären Daten (311) ist; und
   - $\alpha$ der Ziffernwert einer entsprechenden ternären Ziffer $\alpha(k)$ aus den ternären Daten (312) ist.

5. Verfahren (400) gemäß einem der Ansprüche 1 bis 4, wobei

   - die zweiten binären Daten (311) zweite binäre Ziffern x(n) zur Fehlerkorrektur von zumindest einigen der ersten binären Ziffern a(k) der ersten binären Daten (111) umfassen; und/oder
   - die zweiten binären Daten (311) über die ersten binären Daten (111) hinausgehende Information umfassen.

6. Verfahren (400) gemäß einem der Ansprüche 1 bis 5, wobei

   - die zweiten binären Daten (311) und die ersten binären Daten (111) Teil einer Gesamtsequenz von binären Ziffern sind; und

- das Verfahren weiter umfasst, Zuweisen einer binären Ziffer aus der Gesamtsequenz, welche direkt auf eine binäre Ziffer mit dem zweiten binären Ziffernwert folgt, zu den zweiten binären Daten (311).

7.  Verfahren (400) gemäß einem der vorhergehenden Ansprüche, wobei

    - die binären Ziffernwerte "0" und "1" sind; und
    - die ternären Ziffernwerte "-1", "0" und "+1" sind.

8.  Verfahren (400) gemäß einem der vorhergehenden Ansprüche, wobei

    - die Phase des Signals derart moduliert wird, dass zwischen zwei aufeinander folgenden ternären Ziffern $\alpha$(k - 1), $\alpha$(k) die Phase stetig gemäß dem ersten, zweiten oder dritten Zustandsübergang (221, 222, 223) von einem aktuellen Phasen-Zustand (230) in einen neuen Phasen-Zustand (230) überführt wird; und/oder
    - die Phase des Signals gemäß der ternären Daten (312) mit einem Continuous Phase Modulation Verfahren moduliert wird.

9.  Verfahren (400) gemäß einem der vorhergehenden Ansprüche, wobei

    - die Phase des Signals M=4 unterschiedlichen Phasen-Zustände annehmen kann; und/oder
    - die unterschiedliche Phasen-Zustände einen Phasenabstand von $\pi$/2 zueinander aufweisen; und/oder
    - die M unterschiedlichen Phasen-Zustände einen ersten Phasen-Zustand (234) mit einer Phase (0 + $\varphi$), einen zweiten Phasen-Zustand (231) mit einer Phase ($\pi$/2 + $\varphi$), einen dritten Phasen-Zustand (232) mit einer Phase ($\pi$ + $\varphi$) und einen vierten Phasen-Zustand (233) mit einer Phase (- $\pi$/2 + $\varphi$) umfassen, mit $\varphi \in [0, \pi/2)$.

10. Verfahren (400) gemäß einem der vorhergehenden Ansprüche, wobei

    - die Sequenz von ternären Ziffern $\alpha$(k) eine Anzahl von ternären Ziffern $\alpha$(k) aufweist, die einer Anzahl von ersten binären Ziffern a(k) der Sequenz von ersten binären Ziffern a(k) entspricht; und/oder
    - jeder ersten binären Ziffer a(k) genau eine ternäre Ziffer $\alpha$(k) zugewiesen wird.

11. Modulator (112) für einen Sender (110) eines Übertragungssystems (100), wobei der Modulator umfasst,

    - einen Precoder (301), der eingerichtet ist, ternäre Daten (312) aus ersten binären Daten (111) zu generieren; wobei die ersten binären Daten (111) eine Sequenz von ersten binären Ziffern a(k) umfassen; wobei jede erste binäre Ziffer a(k) entweder einen ersten binären Ziffernwert oder einen zweiten binären Ziffernwert annehmen kann; wobei die ternären Daten (312) eine Sequenz von ternären Ziffern $\alpha$(k) umfassen; und wobei jede ternäre Ziffer $\alpha$(k) einen ersten, zweiten oder dritten ternären Ziffernwert annehmen kann; und
    - eine Modulationseinheit (202), die eingerichtet ist, eine Phase eines Signals mit den ternären Daten (312) zu modulieren; wobei die Phase des Signals M unterschiedliche Phasen-Zustände (230) einnehmen kann, mit M>2; wobei die ersten, zweiten und dritten ternären Ziffernwerte ersten, zweiten und dritten Zustandsübergängen (220) zwischen den M Phasen-Zuständen (230) entsprechen; wobei bei dem ersten Zustandsübergang (222) ein Phasen-zustand (230) erhalten bleibt; wobei der zweite Zustandsübergang (221) und der dritte Zustandsübergang (223) eine Veränderung des Phasen-Zustands (230) bewirken; und wobei der Precoder (301) eingerichtet ist, die ternären Daten (312) derart zu generieren, dass
    - allen ersten binären Ziffern a(k) mit dem ersten binären Ziffernwert ternäre Ziffern $\alpha$(k) mit dem ersten ternären Ziffernwert zugewiesen werden;
    - allen ersten binären Ziffern a(k) mit dem zweiten binären Ziffernwert ternäre Ziffern $\alpha$(k) mit dem zweiten oder dem dritten ternären Ziffernwert zugewiesen werden, so dass in der Sequenz von ternären Ziffern $\alpha$(k) der zweite ternäre Ziffernwert nicht direkt auf den dritten Ziffernwert folgt und umgekehrt; und
    - der zweite oder dritte ternäre Ziffernwert in Abhängigkeit von zweiten binären Daten (311) zugewiesen wird; wobei:

        - die zweiten binären Daten (311) eine zweite binäre Ziffer x(n) umfassen; und
        - eine ternäre Ziffer $\alpha$ (k) in Abhängigkeit von der zweiten binären Ziffer x(n) den zweiten ternären Ziffernwert oder den dritten ternären Ziffernwert annimmt.

12. Verfahren zur Demodulation eines Signals, welches mit ternären Daten (312) moduliert wurde, wobei die ternären Daten (312) eine Sequenz von ternären Ziffern $\alpha$(k) umfassen; wobei jede ternäre Ziffer $\alpha$ (k) einen ersten, zweiten oder dritten ternären Ziffernwert annehmen kann; wobei das Verfahren umfasst,

- Ermitteln der ternären Daten (312) aus einer Phase des Signals; wobei die Phase des Signals M unterschiedliche Phasen-Zustände (230) annehmen kann, mit M>2; wobei die ersten, zweiten und dritten ternären Ziffernwerte ersten, zweiten und dritten Zustandsübergängen (220) zwischen den M Phasen-Zuständen (230) entsprechen; wobei bei dem ersten Zustandsübergang (222) ein Phasen-Zustand (230) erhalten bleibt; und wobei der zweite Zustandsübergang (221) und der dritte Zustandsübergang (223) eine Veränderung des Phasen-Zustands (230) bewirken; und
- Ermitteln erster binärer Daten (111) aus den ternären Daten (312);
wobei die ersten binären Daten (111) eine Sequenz von ersten binären Ziffern a(k) umfassen; wobei jede erste binäre Ziffer a(k) entweder einen ersten binären Ziffernwert oder einen zweiten binären Ziffernwert annehmen kann; und wobei die binären Daten (111) derart ermittelt werden, dass

- allen ternären Ziffern $\alpha(k)$ mit dem ersten ternären Ziffernwert eine erste binäre Ziffer a(k) mit dem ersten binären Ziffernwert zugewiesen wird; und
- allen ternären Ziffern $\alpha(k)$ mit dem zweiten oder dritten ternären Ziffernwert eine erste binäre Ziffer a(k) mit dem zweiten binären Ziffernwert zugewiesen wird; und

- Entnehmen zweiter binärer Ziffern x(n) aus den ternären Ziffern $\alpha(k)$, welche den zweiten oder dritten ternären Ziffernwert aufweisen.

13. Ein Demodulator (132) für einen Empfänger (130) eines Übertragungssystems (100); wobei der Demodulator umfasst,

- eine Demodulationseinheit, die eingerichtet ist, ternäre Daten (312) aus einer Phase eines empfangenen Signals zu ermitteln; wobei die ternären Daten (312) eine Sequenz von ternären Ziffern $\alpha(k)$ umfassen; wobei jede ternäre Ziffer $\alpha(k)$ einen ersten, zweiten oder dritten ternären Ziffernwert annehmen kann; wobei die Phase des Signals M unterschiedliche Phasen-Zustände (230) annehmen kann, mit M>2; wobei die ersten, zweiten und dritten ternären Ziffernwerte ersten, zweiten und dritten Zustandsübergängen (220) zwischen den M Phasen-Zuständen (230) entsprechen; wobei bei dem ersten Zustandsübergang (222) ein Phasen-Zustand (230) erhalten bleibt; und wobei der zweite Zustandsübergang (221) und der dritte Zustandsübergang (223) eine Veränderung des Phasen-Zustands (230) bewirken; und
- eine Decodereinheit, die eingerichtet ist, erste binäre Daten (111) aus den ternären Daten (312) zu ermitteln und zweite binäre Ziffern x(n) aus den ternären Ziffern $\alpha(k)$, welche den zweiten oder dritten ternären Ziffernwert aufweisen, zu entnehmen; wobei die ersten binären Daten (111) eine Sequenz von ersten binären Ziffern a(k) umfassen; wobei jede erste binäre Ziffer a(k) entweder einen ersten binären Ziffernwert oder einen zweiten binären Ziffernwert annehmen kann; und wobei die binären Daten (111) derart ermittelt werden, dass
- allen ternären Ziffern $\alpha(k)$ mit dem ersten ternären Ziffernwert eine erste binäre Ziffer a(k) mit dem ersten binären Ziffernwert zugewiesen wird; und
- allen ternären Ziffern $\alpha(k)$ mit dem zweiten oder dritten ternären Ziffernwert eine erste binäre Ziffer a(k) mit dem zweiten binären Ziffernwert zugewiesen wird.

## Claims

1. Method (400) for modulating a signal comprising first binary data (111); the first binary data (111) comprising a sequence of first binary digits a(k); each first binary digit a(k) being able to take on either a first binary digit value or a second binary digit value; the method (400) comprising,

- generating (401) ternary data (312); the ternary data (312) comprising a sequence of ternary digits $\alpha(k)$; and each ternary digit $\alpha(k)$ being able to take on a first, second or third ternary digit value; and
- modulating (402) a phase of the signal using the ternary data (312); the phase of the signal being able to take on M different phase states (230), where M > 2; the first, second and third ternary digit values corresponding to first, second and third state transitions (220) between the M phase states (230); a phase state (230) being maintained in the first state transition (222); the second state transition (221) and the third state transition (223) causing a change in the phase state (230); and the ternary data (312) being generated in such a way that

• ternary digits $\alpha(k)$ having the first ternary digit value are assigned to all binary digits a(k) having the first binary digit value;

• ternary digits α(k) having the second or third ternary digit values are assigned to all binary digits a(k) having the second binary digit value, in such a way that in the sequence of ternary digits α(k) the second ternary digit value does not directly follow the third digit value and vice versa;

**characterised in that** when the ternary data are generated the second or third ternary digit values are further assigned as a function of second binary data (311);
- the second binary data (311) comprising a second binary digit x(n); and
- a ternary digit α(k) taking on the second ternary digit value or the third ternary digit value as a function of the second binary digit x(n).

2.  Method (400) according to claim 1, wherein the ternary data (312) are generated in such a way that a cohesive block of first binary digits a(k) having the second binary digit value are assigned to ternary digits α(k) having the same ternary digit value.

3.  Method (400) according to claim 1, wherein

   - the method (400) further comprises: providing a one-to-one mapping between the first and second binary digit values and the second and third ternary digit values; and
   - the ternary data (312) are generated in such a way that the second or third ternary digit value is assigned as a function of the one-to-one mapping.

4.  Method (400) according to claim 3, wherein

   - the one-to-one mapping is α = 2x - 1;
   - x is the digit value of a second binary digit x (n) from the second binary data (311); and
   - α is the digit value of a corresponding ternary digit α(k) from the ternary data (312).

5.  Method (400) according to any of claims 1 to 4, wherein

   - the second binary data (311) comprise second binary digits x(n) for error correction of at least some of the first binary digits a(k) of the first binary data (111); and/or
   - the second binary data (311) comprise information over and above the first binary data (111).

6.  Method (400) according to any of claims 1 to 5, wherein

   - the second binary data (311) and the first binary data (111) are part of a complete sequence of binary digits; and
   - the method further comprises assigning a binary digit from the complete sequence which directly follows a binary digit having the second binary digit value to the second binary data (311).

7.  Method (400) according to any of the preceding claims, wherein

   - the binary digit values are "0" and "1"; and
   - the ternary digit values are "-1", "0" and "+1".

8.  Method (400) according to any of the preceding claims, wherein

   - the phase of the signal is modulated in such a way that between two consecutive ternary digits α(k-1), α(k) the phase is continuously converted from a current phase state (230) to a new phase state (230) in accordance with the first, second or third state transition (221, 222, 223); and/or
   - the phase of the signal is modulated by continuous phase modulation in accordance with the ternary data (312).

9.  Method (400) according to any of the preceding claims, wherein

   - the phase of the signal can take on M = 4 different phase states; and/or
   - the different phase states have a phase difference of n/2 from one another; and/or
   - the M different phase states comprise a first phase state (234) having phase (0 + φ), a second phase state (231) having phase (n/2 + φ), a third phase state (232) having phase (n + φ) and a fourth phase state (233) having phase (-n/2 + φ), where φ ∈ (0, n/2).

10. Method (400) according to any of the preceding claims, wherein

- the sequence of ternary digits α(k) has a number of ternary digits α(k) corresponding to the number of first binary digits a(k) in the sequence of first binary digits a(k); and/or
- exactly one ternary digit α(k) is assigned to each first binary digit a(k).

11. Modulator (112) for a radiator (110) of a transmission system (100), the modulator comprising

- a pre-coder (301) which is set up to generate ternary data (312) from first binary data (111); the first binary data (111) comprising a sequence of first binary digits a(k); each first binary digit a(k) being able to take on either a first binary digit value or a second binary digit value; the ternary data (312) comprising a sequence of ternary digits α(k); and each ternary digit α(k) being able to take on a first, second or third ternary digit value; and
- a modulation unit (202) which is set up to modulate a phase of a signal using the ternary data (312); the phase of the signal being able to take on M different phase states (230), where M > 2; the first, second and third ternary digit values corresponding to first, second and third state transitions (220) between the M phase states (230); a phase state (230) being maintained in the first state transition (222); the second state transition (221) and the third state transition (223) causing a change in the phase state (230); and the pre-coder (301) being set up to generate the ternary data (312) in such a way that

• ternary digits α(k) having the first ternary digit value are assigned to all binary digits a(k) having the first binary digit value;
• ternary digits α(k) having the second or third ternary digit values are assigned to all binary digits a(k) having the second binary digit value, in such a way that in the sequence of ternary digits α(k) the second ternary digit value does not directly follow the third digit value and vice versa; and
• the second or third ternary digit values are assigned as a function of second binary data (311) ;

- the second binary data (311) comprising a second binary digit x(n); and
- a ternary digit α(k) taking on the second ternary digit value or the third ternary digit value as a function of the second binary digit x(n).

12. Method for demodulating a signal which has been modulated using ternary data (312), the ternary data (312) comprising a sequence of ternary digits α(k); each ternary digit α(k) being able to take on a first, second or third ternary digit value; the method comprising

- determining the ternary data (312) from a phase of the signal; the phase of the signal M being able to take on M different phase states (230), where M > 2; the first, second and third ternary digit values corresponding to first, second and third state transitions (220) between the M phase states (230); a phase state (230) being maintained in the first state transition (222); and the second state transition (221) and the third state transition (223) causing a change in the phase state (230); and
- determining first binary data (111) from the ternary data (312);
the first binary data (111) comprising a sequence of first binary digits a(k); each first binary digit a(k) being able to take on either a first binary digit value or a second binary digit value; and the binary data (111) being determined in such a way that

• a first binary digit a(k) having the first binary digit value is assigned to all ternary digits α(k) having the first ternary digit value; and
• a first binary digit a(k) having the second binary digit value is assigned to all ternary digits α(k) having the second or third ternary digit value; and

- deriving second binary digits x(n) from the ternary digits α(k) having the second or third ternary digit value.

13. Demodulator (132) for a receiver (130) of a transmission system (100); the demodulator comprising

- a demodulator unit which is set up to determine ternary data (312) from a phase of the signal; the ternary data (312) comprising a sequence of ternary digits α(k); each ternary digit α(k) being able to take on a first, second or third ternary digit value; the phase of the signal M being able to take on M different phase states (230), where M > 2; the first, second and third ternary digit values corresponding to first, second and third state transitions (220) between the M phase states (230); a phase state (230) being maintained in the first state transition (222); and the second state transition (221) and the third state transition (223) causing a change in the phase state (230); and

- a decoder unit which is set up to determine first binary data (111) from the ternary data (312) and to derive second binary digits x(n) from the ternary digits α(k) having the second or third ternary digit value; the first binary data (111) comprising a sequence of first binary digits a(k); each first binary digit a(k) being able to take on either a first binary digit value or a second binary digit value; and the binary data (111) being determined in such a way that

• a first binary digit a(k) having the first binary digit value is assigned to all ternary digits α(k) having the first ternary digit value; and
• a first binary digit a(k) having the second binary digit value is assigned to all ternary digits α(k) having the second or third ternary digit value.

**Revendications**

1. Procédé (400) de modulation d'un signal avec des premières données binaires (111); ces premières données binaires (111) comprenant une séquence de premiers chiffres binaires a(k); chaque premier chiffre binaire a(k) pouvant prendre soit une première valeur numérique binaire, soit une deuxième valeur numérique binaire; dans lequel le procédé (400) comprend les suivants:

- génération (401) de données ternaires (312); ces données ternaires (312) comprenant une séquence de chiffres ternaires α(k); et chaque chiffre ternaire α(k) pouvant prendre une première, une deuxième ou une troisième valeur numérique ternaire; et
- modulation (402) d'une phase du signal avec les données ternaires (312); la phase du signal pouvant prendre M différents états de phase (230), M > 2; les premières, deuxièmes et troisièmes valeurs numériques ternaires correspondant à des premières, des deuxièmes et des troisièmes transitions d'état (220) entre les M états de phase (230);dans la première transition de phase (222), un état de phase (230) étant conservé; la deuxième transition d'état (221) et la troisième transition d'état (223) déclenchant un changement de l'état de phase (230); et les données ternaires (312) étant générées de telle sorte que

• à tous les premiers chiffres binaires a(k) avec la première valeur numérique binaire α(k) peuvent être alloués des chiffres ternaires α(k) avec la première valeur numérique ternaire;
• à tous les premiers chiffres binaires a(k) avec la deuxième valeur numérique binaire peuvent être assignés des chiffres ternaires α(k) avec la deuxième ou la troisième valeur numérique ternaire, de sorte que dans la séquence des chiffres ternaires α(k), la deuxième valeur numérique ternaire ne suit pas directement la troisième valeur numérique et inversement;

**caractérisé en ce que**, lors de la génération des données ternaires, il se fait en outre que la deuxième ou la troisième valeur numérique ternaire est allouée en fonction de deuxièmes données binaires (311);
- les deuxièmes données binaires (311) comprenant un deuxième chiffre binaire x(n); et
- un chiffre ternaire α(k) pouvant prendre, en fonction du deuxième chiffre binaire x(n), la deuxième valeur numérique ternaire ou la troisième valeur numérique ternaire.

2. Procédé (400) selon la revendication 1, dans lequel les données ternaires (312) sont générées de telle sorte qu'un bloc contigu de premiers chiffres binaires a(k) avec la deuxième valeur numérique binaire est alloué à des chiffres ternaires α(k) avec la même valeur numérique ternaire.

3. Procédé (400) selon la revendication 1, dans lequel

- le procédé (400) comprend en outre: une correspondance un à un entre les premières et les deuxièmes valeurs numériques binaires et les deuxièmes et troisièmes valeurs numériques ternaires; et
- les données ternaires (312) sont générées de telle sorte que la deuxième ou la troisième valeur numérique ternaire est allouée en fonction de la correspondance un à un.

4. Procédé (400) selon la revendication 3, dans lequel

- la correspondance un à un est $\alpha = 2x-1$;
- x est la valeur numérique d'un deuxième chiffre binaire x(n) des deuxièmes données binaires (311); et
- $\alpha$ est la valeur numérique d'un chiffre ternaire correspondant $\alpha$(k) des données ternaires (312).

5. Procédé (400) selon l'une des revendications 1 à 4, dans lequel

- les deuxièmes données binaires (311) comprennent des deuxièmes chiffres binaires x(n) pour correction des erreurs d'au moins quelques-uns des premiers chiffres binaires a(k) des premières données binaires (111); et/ou
- les deuxièmes données binaires (311) contiennent des informations qui vont au-delà des premières données binaires (111).

6. Procédé (400) selon l'une des revendications 1 à 5, dans lequel

- les deuxièmes données binaires (311) et les premières données binaires (111) sont une partie d'une séquence totale de chiffres binaires; et
- le procédé comprend en outre l'allocation d'un chiffre binaire venant de la séquence totale, laquelle suit directement un chiffre binaire avec la deuxième valeur numérique binaire, aux deuxièmes données binaires (311).

7. Procédé (400) selon l'une des revendications précédentes, dans lequel

- les valeurs numériques binaires sont "0" et "1"; et
- les valeurs numériques ternaires sont "-1", "0" et "+1".

8. Procédé (400) selon l'une des revendications précédentes, dans lequel

- la phase du signal est modulée de telle sorte que, entre deux chiffres ternaires successifs $\alpha$(k-1), $\alpha$(k), la phase se transforme constamment selon la première, la deuxième ou la troisième transition d'état (221, 222, 223) d'un état de phase actuel (230) en un nouvel état de phase (230); et/ou
- la phase du signal est modulée selon les données ternaires (312) par un procédé de modulation de phase continue (Continuous Phase Modulation).

9. Procédé (400) selon l'une des revendications précédentes, dans lequel

- la phase du signal peut prendre M=4 états de phases différents; et/ou
- les différents états de phase présentent l'un par rapport à l'autre une distance entre phases de $\pi/2$; et/ou
- les M différents états de phase comprennent un premier état de phase (234) avec une phase $(0 + \varphi)$, un deuxième état de phase (231) avec une phase $(n/2 + \varphi)$, un troisième état de phase (232) avec une phase $(n + \varphi)$ et un quatrième état de phase (233) avec une phase $(-n/2 + \varphi)$, avec $\varphi \in (0, n/2)$.

10. Procédé (400) selon l'une des revendications précédentes, dans lequel

- la séquence de chiffres ternaires $\alpha$(k) présente un nombre de chiffres ternaires $\alpha$(k) qui correspond à un nombre de premiers chiffres binaires a(k) de la séquence de premiers chiffres binaires a(k); et/ou
- à chaque premier chiffre binaire a(k) est alloué exactement un chiffre ternaire $\alpha$(k).

11. Modulateur (112) pour émetteur (110) d'un système de transmission (100), le modulateur comprenant:

- un précodeur (301) installé pour générer des données ternaires (312) à partir de premières données binaires (111); ces premières données binaires (111) contenant une séquence de premiers chiffres binaires a(k); chaque premier chiffre binaire a(k) pouvant prendre soit une première valeur numérique binaire, soit une deuxième valeur numérique binaire; les données ternaires (312) contenant une séquence de chiffres ternaires $\alpha$(k); et chaque chiffre ternaire $\alpha$(k) pouvant prendre une première, une deuxième ou une troisième valeur numérique ternaire; et
- une unité de modulation (202) installée pour moduler la phase d'un signal avec les données ternaires (312); la phase du signal pouvant prendre M états de phase différents (230), M>2; les premières, deuxièmes et troisièmes valeurs numériques ternaires correspondant à de premières, deuxièmes et troisièmes transitions d'état (220) entre les M états de phase (230); pour la première transition d'état (222), un état de phase (230)

14

étant conservé; la deuxième transition d'état (221) et la troisième transition d'état (223) déclenchant un changement de l'état de phase (230); et le précodeur (301) étant installé pour générer les données ternaires (312) de telle sorte que

- à tous les premiers chiffres binaires a(k) avec la première valeur numérique binaire sont alloués des chiffres ternaires α(k) avec la première valeur numérique ternaire;
- à tous les premiers chiffres binaires a(k) avec la deuxième valeur numérique binaire sont alloués des chiffres ternaires α(k) avec la deuxième ou la troisième valeur numérique ternaire, de sorte que dans la séquence de chiffres ternaires α(k), la deuxième valeur numérique ternaire ne suit pas directement la troisième valeur numérique et inversement; et
- la deuxième ou la troisième valeur numérique ternaire est allouée en fonction de deuxièmes données binaires (311);

    - les deuxièmes données binaires (311) contenant un deuxième chiffre binaire x(n); et
    - un chiffre ternaire α(k) prenant, en fonction du deuxième chiffre binaire x(n), la deuxième valeur numérique ternaire ou la troisième valeur numérique ternaire.

12. Procédé de démodulation d'un signal, lequel est modulé avec des données ternaires (312), ces données ternaires (312) contenant une séquence de chiffres ternaires α(k); dans lequel chaque chiffre ternaire α(k) peut prendre une première, une deuxième ou une troisième valeur numérique ternaire; le procédé comprenant,

- la détection des données ternaires (312) d'une phase du signal; la phase du signal pouvant prendre M différents états de phase (230), M>2; les premières, deuxièmes et troisièmes valeurs numériques ternaires correspondant à des premières, des deuxièmes et des troisièmes transitions d'état (220) entre les M états de phase (230); dans la première transition d'état (222), un état de phase (230) étant conservé; et la deuxième transition d'état (221) et la troisième transition d'état (223) déclenchant un changement de l'état de phase (230); et
- la détection de premières données binaires (111) des données ternaires (312); les premières données binaires (111) comprenant une séquence de premiers chiffres binaires a(k); chaque premier chiffre binaire a(k) pouvant prendre soit une première valeur numérique binaire, soit une deuxième valeur numérique binaire; et dans lequel les données binaires (111) sont détectées de manière que

- à tous les chiffres ternaires α(k) avec la première valeur numérique ternaire, est alloué un premier chiffre binaire a(k) avec la première valeur numérique binaire; et
- à tous les chiffres ternaires α(k) avec la deuxième ou la troisième valeur numérique ternaire, est alloué un premier chiffre binaire a(k) avec la deuxième valeur numérique binaire; et

- prélèvement de deuxièmes chiffres binaires x(n) des chiffres ternaires α(k), lesquels présentent la deuxième ou la troisième valeur numérique ternaire.

13. Démodulateur (132) pour récepteur (130) d'un système de transmission (100), le démodulateur comprenant,

- une unité de démodulation, installée pour détecter des données ternaires (312) de la phase d'un signal reçu; ces données ternaires (312) contenant une séquence de chiffres ternaires α(k); chaque chiffre ternaire α(k) pouvant prendre une première, une deuxième ou une troisième valeur numérique ternaire; la phase du signal pouvant prendre M différents états de phase (230), M>2; les premières, deuxièmes et troisièmes valeurs numériques ternaires correspondant à des premières, deuxièmes et troisièmes transitions d'état (220) entre les M états de phase (230); dans la première transition d'état (222) un état de phase (230) étant conservé; et la deuxième transition d'état (221) et la troisième transition d'état (223) déclenchant un changement de l'état de phase (230); et
- une unité de décodeur, installée pour détecter des premières données binaires (111) des données ternaires (312) et pour prélever des deuxièmes chiffres binaires x(n) des chiffres ternaires α(k), lesquels présentent la deuxième ou la troisième valeur numérique ternaire; les premières données binaires (111) contenant une séquence de premiers chiffres binaires a(k); chaque premier chiffre binaire a(k) pouvant prendre soit une première valeur numérique binaire, soit une deuxième valeur numérique binaire; et les données binaires (111) étant détectées de telle sorte que

- à tous les chiffres ternaires α(k) avec la première valeur numérique ternaire, est alloué un premier chiffre binaire a(k) avec la première valeur numérique binaire; et

• à tous les chiffres ternaires $\alpha(k)$ avec la deuxième ou la troisième valeur numérique ternaire, est alloué un premier chiffre binaire a(k) avec la deuxième valeur numérique binaire.

Fig. 1

$a(k) \in \{0,1\}$       $\alpha(k) \in \{-1,0,1\}$

Fig. 2a

Fig. 2b

$a(k) \in \{0,1\}$

$\alpha(k) \in \{-1,0,1\}$

111   211

312

112   301   202

$x(k) \in \{0,1\}$

321   311

**Fig. 3**

400

| Generieren von ternären Daten |
|---|

401

| Modulieren eines Signals |
|---|

402

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SIMON M K.** MULTIPLE-BIT DIFFERENTIAL DETECTION OF OFFSET QPSK. *IEEE TRANSAC- TIONS ON COMMUNICATIONS,* 01. Juni 2003, vol. 51 (6), 1004-1011
- **ERIK PERRINS et al.** Shaped-Offset QPSK with Multiple-Bit Differential Detection. *IEEE INTERNATIONAL CONFERENCE ON COMMUNICATIONS - ICC '06,* 01. Juni 2006, 1212-1218
- **BALACHANDRA KUMARASWAMY et al.** Simpli- fied 2-State Detectors for SOQPSK. *IEEE MILITARY COMMUNICATIONS CONFERENCE - MILCOM 2007,* 29. Oktober 2007, 1-7
- **PERRINS E et al.** Reduced-complexity approach to iterative detection of coded MIL-STD SOQPSK. *IEEEGLOBAL TELECOMMUNICATIONS CON- FERENCE - GLOBECOM '05,* 28. November 2005, vol. 3, 1609-1613
- **UMASHANKAR BALASUBRAMANIAN et al.** Te- lemetry applications of SOQPSK and GMSK based modulation for airborne platforms. *IEEE INTERNATIONAL CONFERENCE ON COMMUNICATIONS, DEVICES AND INTELLIGENT SYSTEMS - CODIS 2012,* 28. Dezember 2012, 17-20